# EUROPEAN PATENT APPLICATION

(11) **EP 2 144 357 A1**
(43) Date of publication of application: **13.01.2010**
(21) Application number: 07846228.0
(22) Date of filing: 29.12.2007
(51) Int. Cl.: H02M 3/335

(54) **A SWITCHED DC-DC CONVERSION SYSTEM FOR ISOLATING HIGH FREQUENCY AND A METHOD THEREOF**

(30) Priority: 16.03.2007 CN 200710087528
(71) Applicant: Huawei Technologies Co., Ltd., Longgang District, Shenzhen Guangdong 518129 (CN)
(72) Inventor: LI, Chengyong, Shenzhen Guangdong 518129 (CN)
(74) Representative: Barth, Stephan Manuel
(86) International application number: PCT/CN2007/071402
(87) International publication number: WO 2008/113242

(57) **Abstract**

A system includes a transformer primary-circuit and a transformer. The transformer primary-circuit outputs a square wave voltage to be converted to the transformer. The system further includes a PWM controller and a transformer secondary-circuit. The transformer secondary-circuit includes a Buck conversion circuit and a load, the Buck conversion circuit is configured to: receive the PWM control signal output by the PWM controller, perform Buck conversion for the square wave voltage output by the transformer according to the PWM control signal, output the converted voltage to the load, and feed back the output signal of the load to the PWM controller. The PWM controller is configured to: output the PWM control signal, drive the transformer primary-circuit and the transformer secondary-circuit, and regulate the PWM control signal to be output to the transformer secondary-circuit upon receiving the output signal of the load.

## Description

### FIELD

The present invention relates to Direct Current (DC) voltage conversion circuit technologies, and in particular, to a system and a method for implementing DC-DC conversion of an isolation high-frequency switch.

### BACKGROUND

A DC voltage conversion circuit is also known as a DC chopper. It is a circuit that converts a DC voltage to another fixed voltage or adjustable DC voltage, and is widely applied to the fields such as regulated power supply of a controllable DC switch, speed regulating control of a DC motor, and welding power supply. In the high-frequency switch field, the high-frequency DC-DC converter converts the input voltage to another modality through a main circuit that uses a semiconductor power component as a switch, and then the voltage is output in this modality. During the conversion, an automatically controlled closed-loop is adopted to stabilize the voltage output, and a protection apparatus is also adopted. Therefore, various voltage and current outputs required by the user are obtained.

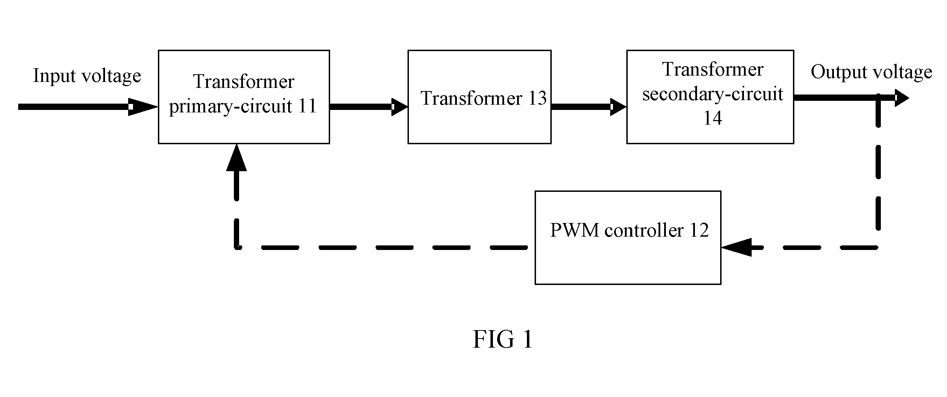

FIG. 1 is a schematic diagram showing a topology of full-bridge isolation conversion of an isolation high-frequency switch system in the related art. The system includes: a transformer primary-circuit 11, a transformer 13, a transformer secondary-circuit 14, and a Pulse Width Modulation (PWM) controller 12.

The transformer primary-circuit 11 is configured to perform full-bridge conversion for the input voltage.

The transformer 13 is configured to isolate the transformer primary-circuit 11 from the transformer secondary circuit 14, and convert transformer input voltage to transformer output voltage.

The transformer secondary-circuit 14 is configured to convert the transformer output voltage to an output voltage.

The PWM controller 12 is configured to control the transformer primary-circuit 11, receive feedback signals such as voltage and current signals, and output PWM control signals according to the feedback signals to control the transformer primary-circuit 11 to regulate the output voltage.

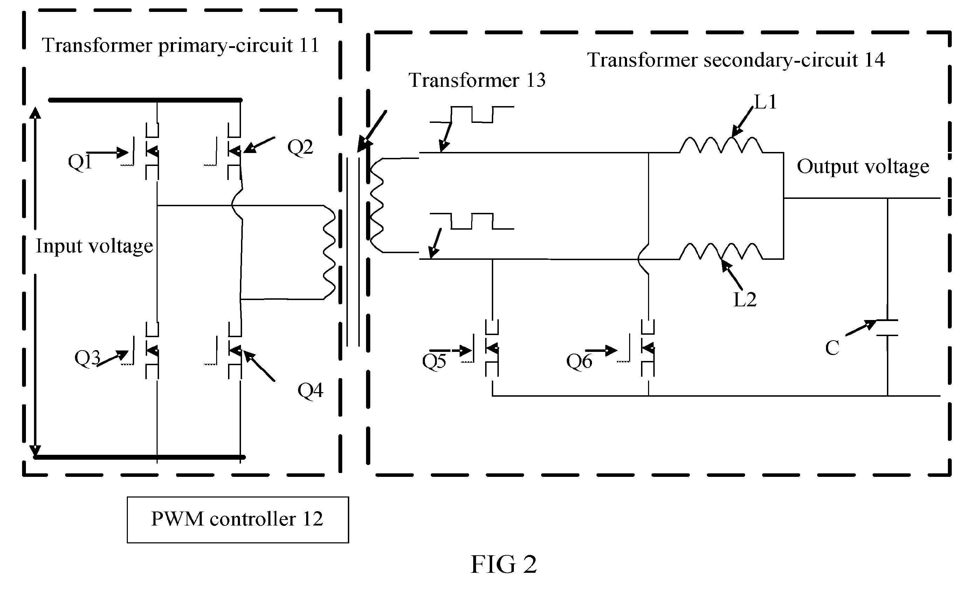

FIG. 2 illustrates a schematic structure of a system based on FIG. 1. The system includes: a transformer primary-circuit 11, a PWM controller 12, a transformer 13, and a transformer secondary-circuit 14.

The transformer primary-circuit 11 includes Metal-Oxide Semiconductor (MOS) diodes Q1, Q2, Q3, and Q4.

The PWM controller 12 is configured to receive the feedback signals such as voltage and current signals, output PWM control signals with an adjustable duty ratio according to the feedback signals to drive the gate terminal of the MOSFETs Q1, Q2, Q3, and Q4 to turn on or turn off the MOSFETs Q1, Q2, Q3, and Q4, and therefore the output voltage is regulated.

The transformer 13 is a main isolation transformer and is configured to isolate the transformer primary-circuit 11 and the transformer secondary-circuit 14.

The transformer secondary-circuit 14 includes MOSFETs Q5 and Q6, output energy storage and filtering inductors L1 and L2, and an output energy storage and filtering capacitor C.

The MOSFETs Q1, Q2, Q3, and Q4 constitute two bridge arms of the transformer primary circuit 11, and perform full-bridge conversion for the input voltage. The PWM controller 12 outputs PWM control signals to drive the gate terminal of the MOSFETs Q1, Q2, Q3, and Q4 to turn on or turn off the MOSFETs Q1, Q2, Q3, and Q4. The transformer 13 is a main isolation transformer. The MOSFETs Q5 and Q6 are synchronous rectification MOSFETs of the transformer secondary-circuit apparatus 14. The MOSFETs Q5 and Q6 may be controlled through the PWM control signals output by the PWM controller, or through the drive signals generated by other circuits. The MOSFETs Q5 and Q6, the inductors L1 and L2, and the capacitor C constitute the current doubling rectification circuit of the transformer secondary-circuit apparatus 14. The working principles of the current doubling rectification circuit are outlined below:

When high level exists at the side where the transformer 13 is connected with the inductor L1, the MOSFET Q5 is turned on, and the inductor L1 and the capacitor C perform energy storage and filtering for the Alternating Current (AC) voltage output by the transformer 13. When the MOSFET Q5 is turned on, the current flow through the MOSFET Q5 is iₛ, and the iₛ satisfy the equation: iₛ= i₁₁. When the current flows through the inductor L1, the current increases linearly, the current flowing through the load is Iₒ, and a voltage Vₒ is output at two sides of the load. If iₛ > Iₒ, the capacitor C is in the charging state.

When the MOSFET Q5 is turned on, the MOSFET Q6 is turned off. The magnetic field in the inductor L2 changes the voltage polarity at both sides of the inductor L2 to maintain the continuity of the current iₗ₂. At this time, the MOSFET Q5, the capacity C, and the inductor L2 constitute a continuing current loop. When iₗ₁ < Iₒ, the capacitor C is in the discharging state, and the load current Iₒ and the voltage Vₒ keep unchanged.

Conversely, when a high level exists at side where the transformer 13 is connected with the inductor L2, the MOSFET Q6 is turned on. Its working principles are similar to that when the MOSFET Q5 is turned on, and are not repeated here any further.

It can be seen from the above description that, the output voltage Vₒ of a load is regulated by using the PWM control signal with an adjustable duty ratio to control the time of turning on and turning off the MOSFETs Q1, Q2, Q3, and Q4, where the PWM control signal is output by a PWM controller. In the related art, the PWM controller controls the MOSFETs of the transformer primary-circuit. The output signals such as voltage and current signals generally need to be fed back to the PWM controller through an isolation component such as isolation optical-coupler, and the PWM controller outputs PWM control signal at the transformer primary side to regulate the output voltage.

However, currently, the DC-DC conversion power supply of some isolation high-frequency switches requires a wide regulation range of the output voltage due to special requirements of the user (for example, some power amplifiers require the regulation range of the output voltage to be 16.8V - 30.8V), and requires a fast regulation response. According to the conventional technologies, the output voltage of a load is regulated by using the PWM control signal with an adjustable duty ratio to control the time of turning on and turning off the MOSFET at the primary side of the isolation transformer, where the PWM control signal is output by a PWM controller. When the dynamic regulation range of the output voltage is wide, the duty ratio of the PWM control signal with an adjustable duty ratio, which is output by the PWM controller, would fluctuate sharply. Therefore, the working magnetic induction strength of the transformer tends to exceed the saturated magnetic induction strength of the transformer and leads to magnetic saturation risks of the transformer, and in practice, the isolation transformer tends to other problems such as howl. Meanwhile, the isolation component such as voltage feedback isolation optical-coupler connected to the primary side of the transformer feeds back voltage signals, thus leading to delay; therefore, the speed of dynamic regulation response is very low in the case of wide-range voltage regulation of the circuit output.

### SUMMARY

A system for implementing DC-DC conversion of an isolation high-frequency switch is disclosed in an embodiment of the present invention to improve the speed of dynamic response in the case of wide-range regulation of the output voltage.

A method for implementing DC-DC conversion of an isolation high-frequency switch is also disclosed herein to improve the speed of dynamic response in the case of wide-range regulation of the output voltage.

In order to fulfill the foregoing objectives, the technical solution under the present invention is implemented in following way.

A system for implementing DC-DC conversion of an isolation high-frequency switch is disclosed. The system includes a transformer primary-circuit and a transformer.
The transformer primary-circuit outputs a square wave voltage that to be converted to the transformer.

The system further includes a PWM controller, and a transformer secondary-circuit. The transformer secondary-circuit includes a Buck conversion circuit and a load, the Buck conversion circuit is configured to: receive the PWM control signal output by the PWM controller, perform Buck conversion for the square wave voltage output by the transformer according to the PWM control signal, output the converted voltage to the load, and feed back the output signal of the load to the PWM controller.

The PWM controller is configured to: output the PWM control signal to drive the transformer primary-circuit and the transformer secondary-circuit, and regulate the PWM control signal to be output to the transformer secondary-circuit upon receiving the output signal of the load.

A method for implementing DC-DC conversion of an isolation high-frequency switch is disclosed. The method includes:
performing, by a transformer primary-circuit, full-bridge conversion for the input voltage under the control of a PWM control signal output by a PWM controller, and outputting a square wave voltage to a transformer secondary-circuit through the transformer; and
performing, by the transformer secondary-circuit, Buck conversion for the square wave voltage output by the transformer according to the PWM control signal output by the PWM controller, outputting the converted voltage to the load, and feeding back the output signal of the load to the PWM controller.

Through the technical solution described above, it is evident that in the method and the system for implementing DC-DC conversion of an isolation high-frequency switch, the PWM controller controls the PWM control signal output by the gate terminal of the MOSFET at the secondary side of the transformer. Therefore, no delay is generated by the voltage signal fed back by an isolation component such as a voltage feedback isolation optical-coupler between the secondary side and the primary side of the transformer. The non-isolation Buck conversion circuit provides high-speed dynamic regulation response, thus improving the speed of dynamic regulation response of the whole circuit output voltage. Meanwhile, the Buck conversion circuit is directly coupled with the secondary side of the transformer and capable of both Buck conversion and synchronous rectification. Therefore, through the regulation by the Buck conversion circuit, the square wave voltage output by the transformer is chopped directly to obtain the wide-range output voltage required by the load. In this way, the risks of magnetic saturation of the transformer are avoided because the working magnetic induction strength of the transformer never exceeds the saturated magnetic induction strength of the transformer any more, and the howl of the isolation transformer is avoided in the practical application.

### BRIEF DESCRIPTION OF THE DRAWINGS

FIG. 1 is a schematic structural diagram showing a topology of full-bridge isolation conversion of an isolation high-frequency switch system in the related art;

FIG. 2 illustrates a schematic structure of a system based on FIG. 1;

FIG. 3 is a schematic diagram showing a structure of a system for implementing DC-DC conversion of an isolation high-frequency switch according to an embodiment of the present invention;

FIG. 4 is a schematic diagram showing a structure of a system for implementing DC-DC conversion of an isolation high-frequency switch according to the first embodiment of the present invention;

FIG. 5 is a schematic diagram showing a working time sequence of a MOSFET at the secondary side of a transformer according to the first embodiment of the present invention;

FIG. 6 is a schematic diagram showing a structure of an equivalent circuit within the T1 time segment according to the first embodiment of the present invention;

FIG. 7 is a schematic diagram showing a structure of an equivalent circuit within the T2 time segment according to the first embodiment of the present invention;

FIG. 8 is a schematic diagram showing a structure of an equivalent circuit within the T3 time segment according to the first embodiment of the present invention;

FIG. 9 is a schematic diagram showing a structure of an equivalent circuit within the T4 time segment according to the first embodiment of the present invention;

FIG. 10 is a schematic diagram showing a structure of an equivalent circuit within the T5 time segment according to the first embodiment of the present invention;

FIG. 11 is a schematic diagram showing a structure of an equivalent circuit within the T6 time segment according to the first embodiment of the present invention;

FIG. 12 is a schematic diagram showing a structure of a system for implementing DC-DC conversion of an isolation high-frequency switch according to the second embodiment of the present invention;

FIG. 13 is a schematic diagram showing a structure of an equivalent circuit within the T2 time segment according to the second embodiment of the present invention;

FIG. 14 is a schematic diagram showing another structure of a system for implementing DC-DC conversion of an isolation high-frequency switch according to an embodiment of the present invention;

FIG. 15 is a schematic diagram showing a structure of a system for implementing DC-DC conversion of an isolation high-frequency switch according to the third embodiment of the present invention;

FIG. 16 is a schematic diagram showing a structure of a system for implementing DC-DC conversion of an isolation high-frequency switch according to the fourth embodiment of the present invention;

FIG. 17 is a schematic diagram showing a structure of a system for implementing DC-DC conversion of an isolation high-frequency switch according to the fifth embodiment of the present invention;

FIG. 18 is a schematic flowchart of a method for implementing DC-DC conversion of an isolation high-frequency switch according to an embodiment of the present invention;

FIG. 19 is a schematic flowchart of a method for implementing DC-DC conversion of an isolation high-frequency switch according to the sixth embodiment of the present invention; and

FIG. 20 is a schematic flowchart of a method for implementing DC-DC conversion of an isolation high-frequency switch according to the seventh embodiment of the present invention.

### DETAILED DESCRIPTION

In order to make the technical solution, objectives and merits of the present invention clearer, the invention is detailed below by reference to accompanying drawings and preferred embodiments.

In the embodiments of the present invention, a PWM controller controls the transformer secondary-circuit, regulates the output voltage according to the received output signal of the load, and makes use of the high-speed dynamic regulation response provided by the non-isolation Buck conversion circuit, thus increasing the speed of dynamic regulation response of the output voltage of the whole circuit. Meanwhile, the PWM controller outputs a PWM control signal with a fixed or adjustable duty ratio to control the time of turning on and turning off the transformer primary-circuit, and performs full-bridge conversion for the input voltage, thus preventing the working magnetic induction strength of the transformer from exceeding the saturated magnetic induction strength of the transformer, avoiding the risks of magnetic saturation of the transformer, and avoiding howl of the isolation transformer in the practical application.

In order to fulfill the foregoing objectives, a system for implementing DC-DC conversion of an isolation high-frequency switch is disclosed.

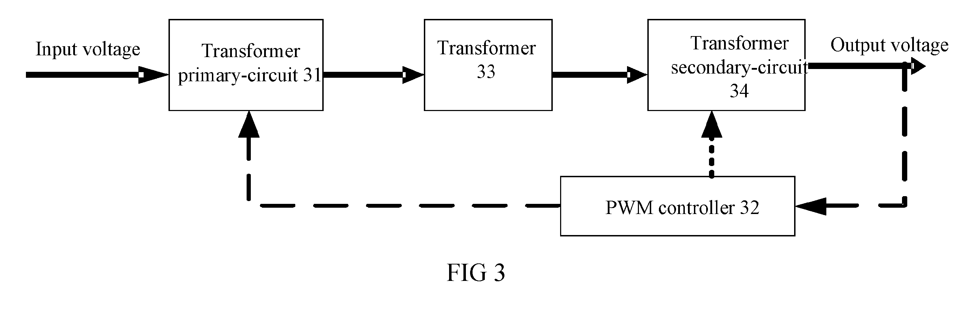

FIG. 3 is a schematic diagram showing a structure of a system for implementing DC-DC conversion of an isolation high-frequency switch according to an embodiment of the present invention. As shown in FIG. 3, the system includes a transformer primary-circuit 31, a transformer 33, a transformer secondary-circuit 34, and a PWM controller 32.

The transformer primary-circuit 31 is configured to receive a PWM control signal output by the PWM controller 32, and perform full-bridge conversion for the input voltage according to the PWM control signal.

The transformer 33 is configured to isolate the transformer primary-circuit 31 from the transformer secondary circuit 34, and convert transformer input voltage to transformer output voltage.

The transformer secondary-circuit 34, which includes a Buck conversion circuit, is configured to receive the PWM control signal output by the PWM controller 32, perform Buck conversion for the square wave voltage output by the transformer according to the PWM control signal, output the converted voltage to the load, and feed back the output signal of the load to the PWM controller 32.

The PWM controller 32 is configured to output the PWM control signal to drive the transformer primary-circuit 31 and the transformer secondary-circuit 34, and regulate the PWM control signal to be output to the transformer secondary-circuit upon receiving the output signal of the load.

By reference to FIG. 3, two embodiments are given below to elaborate the system for implementing DC-DC conversion of an isolation high-frequency switch.

### Embodiment 1

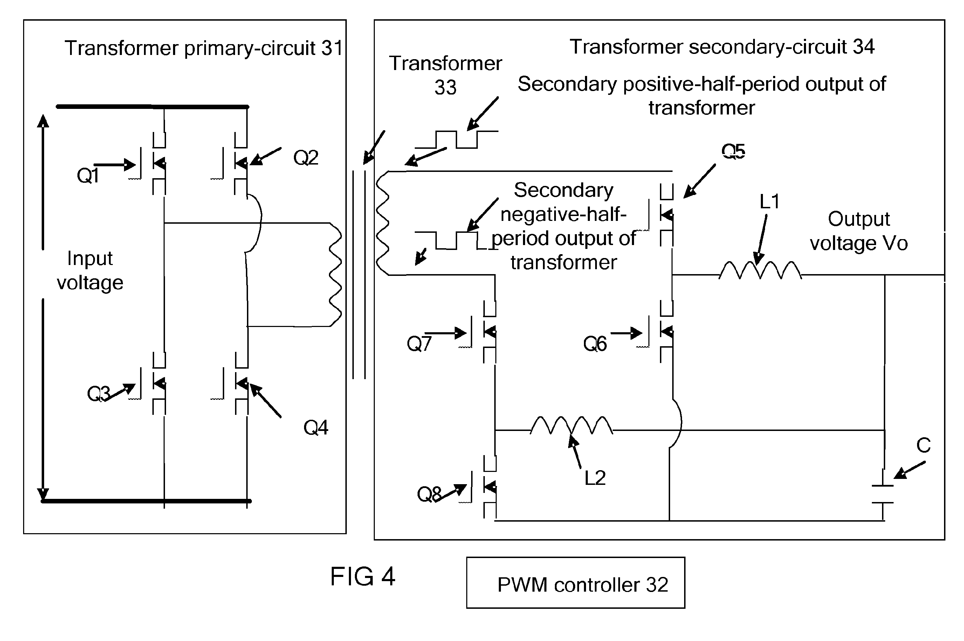

FIG. 4 is a schematic diagram showing a structure of a system for implementing DC-DC conversion of an isolation high-frequency switch according to the first embodiment of the present invention. As shown in FIG. 4, the system includes a transformer primary-circuit 31, a PWM controller 32, a transformer 33, and a transformer secondary-circuit 34.

The transformer primary-circuit 31 includes MOSFETs Q1, Q2, Q3, and Q4. A source terminal of the MOSFET Q1 is connected with a drain terminal of the MOSFET Q3 and one side of the input voltage of the transformer. A source terminal of the MOSFET Q2 is connected with a drain terminal of the MOSFET Q4 and the other side of the input voltage of the transformer. The drain terminals of the MOSFETs Q1 and Q2 are connected with one side of the input voltage. The source terminals of the MOSFETs Q3 and Q4 are connected with the other side of the input voltage. The MOSFETs Q1 and Q3 constitute one bridge arm of the full bridge at the primary side of the DC-DC conversion transformer, and the MOSFETs Q2 and Q4 constitute the other bridge arm. Both bridge arms are configured to perform full-bridge conversion for the input voltage.

In the practical application, the MOSFET of the transformer primary-circuit 31 may be a triode, and may be a Bipolar Junction Transistor (BJT).

The transformer secondary-circuit 34 includes four MOSFETs (Q5, Q6, Q7, Q8), two inductors (L1, L2), and a capacitor C. Q5, Q6, L1, and C constitute one phase of a Buck conversion circuit, namely, the first-half-period Buck conversion, in a topology of a conversion circuit capable of two-phase Buck conversion and synchronous rectification at the secondary side of the transformer. Q7, Q8, L2, and C constitute the other phase of the Buck conversion circuit, namely, the last-half-period Buck conversion, in the topology of the conversion circuit capable of two-phase Buck conversion and synchronous rectification at the secondary side of the transformer. The square wave voltage output by the transformer undergoes Buck conversion is output to the load. Meanwhile, the output signal of the load is fed back to the PWM controller 32. The output voltage signal may be fed back to the PWM controller 32 directly, or the current signal output by the load may be fed back to the PWM controller 32.

The connection relations of the transformer secondary-circuit 34 are described below.

The MOSFET Q5 is connected in series to the MOSFET Q6. A drain terminal of the MOSFET Q5 is connected with the output side of the transformer, a source terminal of the MOSFET Q5 is connected with a drain terminal of the MOSFET Q6 and the first terminal of the inductor L1, and a gate terminal of the MOSFET Q5 is configured to receives the PWM control signal output by the PWM controller. The second terminal of the inductor L1 is connected with the second terminal of the inductor L2, a first terminal of the capacitor C, and the output side of the load. The gate terminal of the MOSFET Q6 is configured to receive the PWM control signal output by the PWM controller.

The second terminal of the capacitor C is connected with the source terminal of the MOSFET Q6 and the source terminal of the MOSFET Q8.

The MOSFET Q7 is connected in series with the MOSFET Q8. A drain terminal of the MOSFET Q7 is connected with the second output side of the transformer, the source terminal of the MOSFET Q7 is connected with the drain terminal of the MOSFET Q8 and the first terminal of the inductor L2, and the gate terminal of the MOSFET Q7 is configured to receive the PWM control signal output by the PWM controller.

The gate terminal of the MOSFET Q8 is configured to receive the PWM control signal output by the PWM controller.

The PWM control signal output by the PWM controller 32, whose duty ratio is adjustable, controls the time of turning on and turning off the MOSFETs Q5-Q8.

The PWM controller 32 is configured to output a control signal, whose duty ratio is approximately fixed 50% or adjustable, drive the gate terminal of the MOSFETs Q1, Q2, Q3, and Q4, and to turn on or turn off the MOSFETs Q1, Q2, Q3, and Q4. The PWM controller 32 is further configured to output another PWM control signal with an adjustable duty ratio according to the received output signal of the load to regulate the output PWM control signal to drive the gate terminal of the MOSFETs Q5, Q6, Q7, and Q8 to turn on or turn off the MOSFETs Q5, Q6, Q7, and Q8.

The transformer 33 is a main isolation transformer, configured to isolate the transformer primary-circuit 31 from the transformer secondary circuit 34, and convert transformer input voltage to transformer output voltage for outputting.

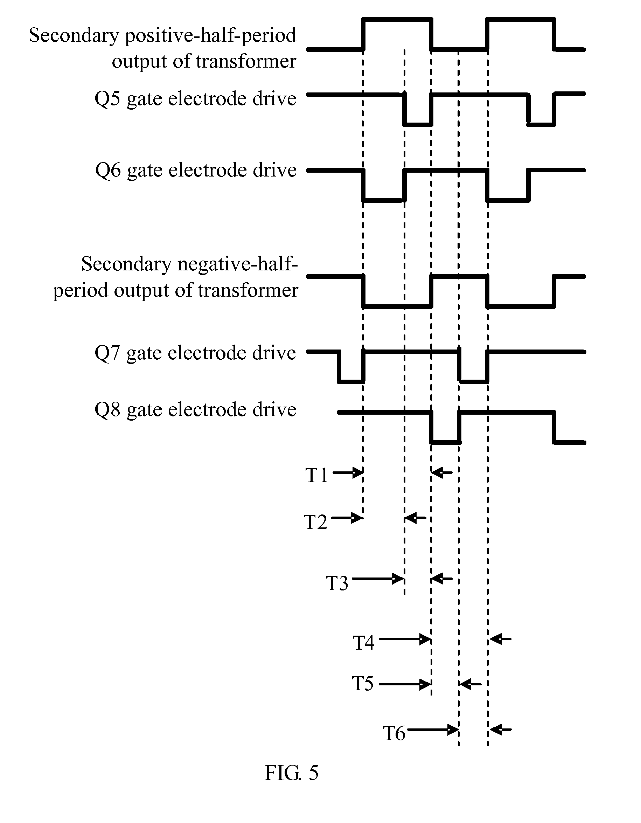

FIG. 5 is a schematic diagram showing a working time sequence of a MOSFET at the secondary side of a transformer according to the first embodiment of the present invention. As shown in FIG. 5, the time sequence chart includes the positive-half-period output time sequence and the negative-half-period output time sequence at the secondary side of the transformer. The signal of the positive-half-period output time sequence is contrary to the signal of the negative-half-period output time sequence. In the T1 time segment, the system works at the positive half period; the MOSFET Q5, the MOSFET Q6, the inductor L1, and the capacitor C work in the Buck conversion state; the MOSFETs Q7 and Q8 are turned on at the same time. In the T4 time segment, the system works at the negative half period; the MOSFET Q7, the MOSFET Q8, the inductor L2, and the capacitor C work in the Buck conversion state; and the MOSFETs Q5 and Q6 are turned on at the same time.

The working time sequences in the first embodiment are detailed below.

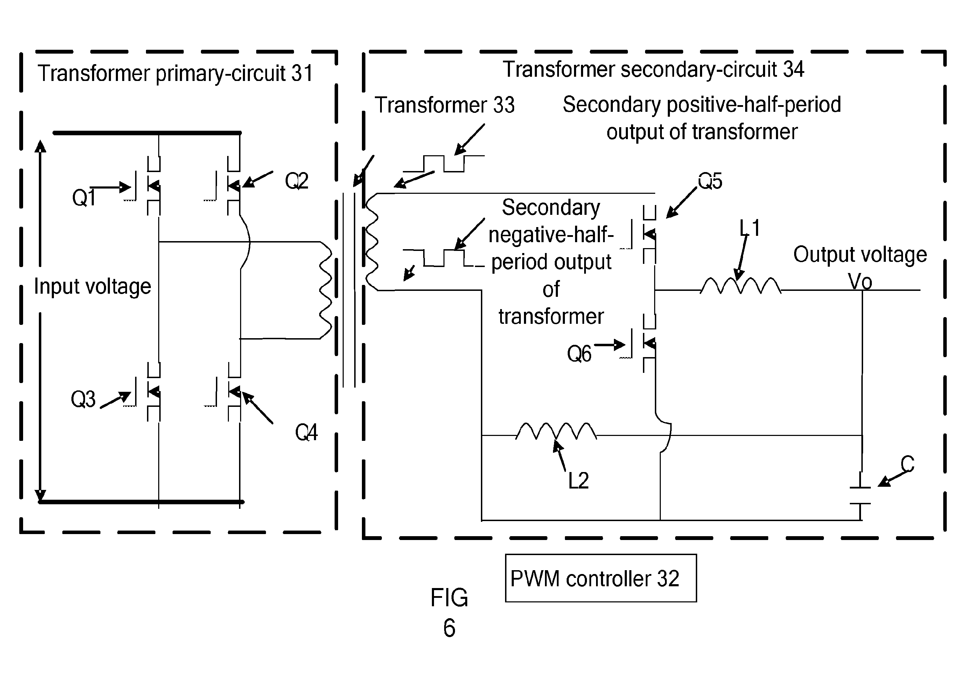

FIG. 6 is a schematic diagram showing a structure of an equivalent circuit within the T1 time segment according to the first embodiment of the present invention. As shown in FIG. 6, in the T1 time segment, the system works in the positive half period, namely, the first half period; the MOSFET Q5, the MOSFET Q6, and the inductor L1 work in the Buck conversion state; the MOSFETs Q7 and Q8 are turned on simultaneously because all the gate terminal drive signals are high-level signals; the MOSFET Q5, the MOSFET Q6, and the inductor L1 constitute a traditional Buck conversion circuit. The Buck conversion circuit chops the square wave level output by the transformer directly to obtain an output voltage Vₒ.

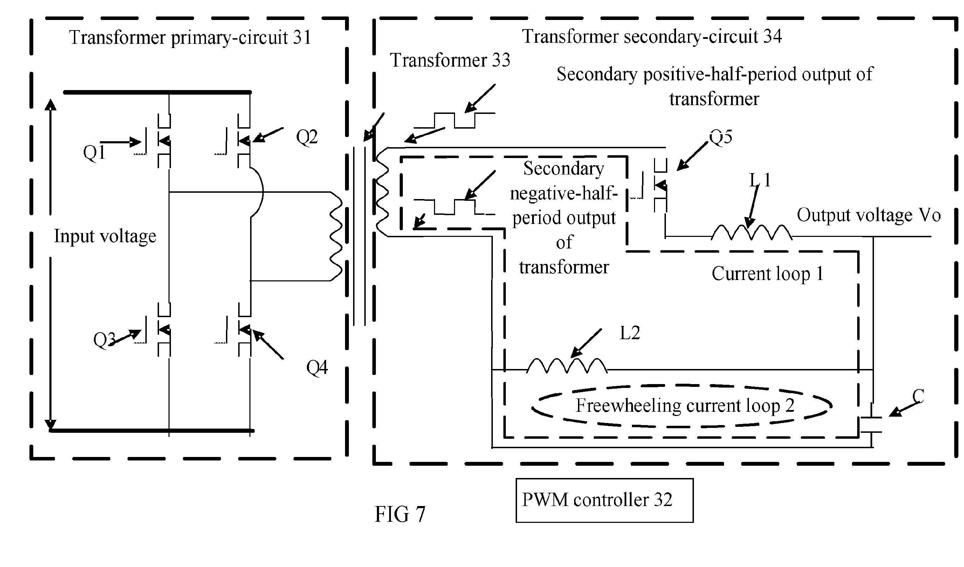

FIG. 7 is a schematic diagram showing a structure of an equivalent circuit within the T2 time segment according to the first embodiment of the present invention. As shown in FIG. 7, in the T2 time segment, the output of the gate terminal drive of the MOSFET Q5 is a high electrical level, the output of the first output side of the transformer connected with the MOSFET Q5 is at a high electrical level, the output of the second output side of the transformer connected with the MOSFET Q6 is at a low electrical level, the MOSFET Q5 is turned on, and the MOSFET Q6 is turned off. The square wave voltage output by the transformer 33 undergoes energy storage and filtering performed by the inductor L1 and the capacitor C. The MOSFETs Q7, Q8, and Q5 in a secondary winding of the transformer 33, the inductor L1, the capacitor C, and the load constitute a current loop 1; the MOSFET Q8 in a secondary winding of the transformer 33, the inductor L2, the capacitor C, and the load constitute a continuing current loop 2.

When the MOSFET Q5 is turned on, the current flowing through the load is iₛ = iₗ₁. When the current flows through the inductor L1, the current increases linearly. The current flowing through the load is Iₒ, and the output voltage between the two terminals of the load is Vₒ. The voltage at the second terminal of the inductor L1 connected with the load is the output voltage Vₒ, the voltage at the first terminal of the inductor L1 connected with the source terminal of the MOSFET Q5 is Vs, and the voltage difference between both two terminals of the inductor L1 is (Vₛ-Vₒ).

When the MOSFET Q5 is turned on, the MOSFET Q6 is turned off. The MOSFET Q8, the inductor L2, the capacitor C, and the load constitute the continuing current loop 2. When iₗ₁ + iₗ₂ < Iₒ, the capacitor C is in the discharging state; conversely, the capacitor C is in the charging state. The output voltage Vₒ and the current Iₒ keep unchanged, and the output signal of the load is fed back to the PWM controller 32.

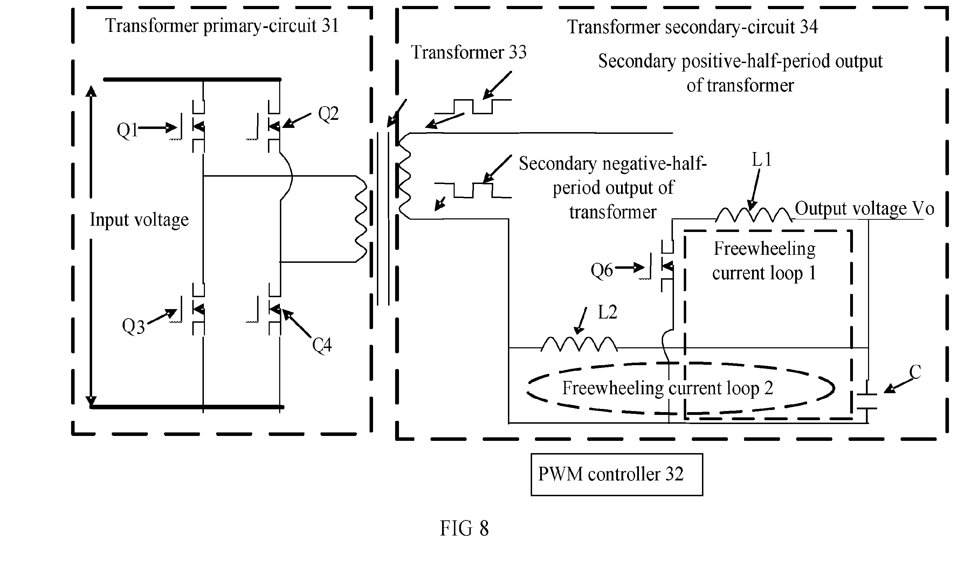

FIG. 8 is a schematic diagram showing a structure of an equivalent circuit within the T3 time segment according to the first embodiment of the present invention. As shown in FIG. 8, in the T3 time segment, the output of the first output side of the transformer connected with the MOSFET Q5 is at a low electrical level, and the MOSFET Q5 is turned off; the output of the second output side of the transformer connected with the MOSFET Q6 is at a high electrical level, and the MOSFET Q6 is turned on. The MOSFETs Q7 and Q8 are turned on because the gate terminal drive signal is still a high-level signal. The MOSFET Q6 in a secondary winding of the transformer 33, the inductor L1, the capacitor C, and the load constitute a continuing current loop 1. The MOSFET Q8 in a secondary winding of the transformer 33, the inductor L2, the capacitor C, and the load constitute a continuing current loop 2.

The magnetic field in the inductor L1 changes the voltage polarity at both terminals of the inductor L1 to maintain continuity of the current iₗ₁. In this case, the voltage at the second terminal of the inductor L1 is output voltage Vₒ. The voltage at the first terminal connected with the source terminal of the MOSFET Q5 is zero, and the MOSFET Q6, the capacitor C, and the inductor L1 constitute a continuing loop.

At the same time, the MOSFET Q8, the inductor L2, the capacitor C, and the load still constitute the continuing current loop 2. When iₗ₁ + iₗ₂ < Iₒ, the capacitor C is in the discharging state; conversely, the capacitor C is in the charging state. The load output voltage Vₒ and the current Iₒ keep unchanged, and the output signal of the load is fed back to the PWM controller 32.

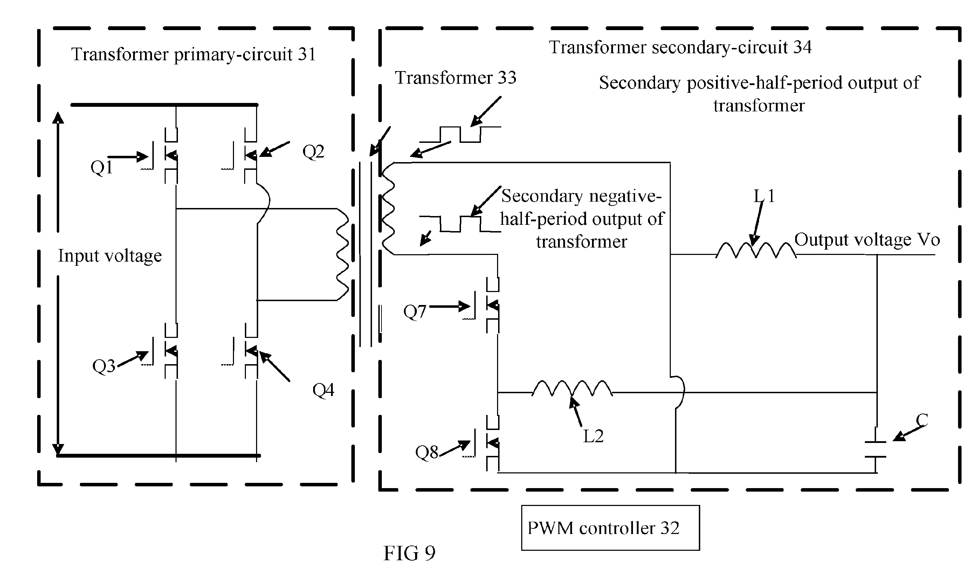

FIG. 9 is a schematic diagram showing a structure of an equivalent circuit within the T4 time segment according to the first embodiment of the present invention. As shown in FIG. 9, in the T4 time segment, the system works in the negative half period, namely, the last half period; the MOSFET Q7, the MOSFET Q8, and the inductor L2 work in the Buck conversion state; the MOSFETs Q5 and Q6 are turned on simultaneously because all the gate terminal drive signals are high-level signals; the MOSFET Q5, the MOSFET Q8, and the inductor L2 constitute a traditional Buck conversion circuit. The Buck conversion circuit chops the square wave level output by the transformer directly to obtain an output voltage Vₒ.

The T4 time segment may be subdivided into a T5 time segment and a T6 time segment.

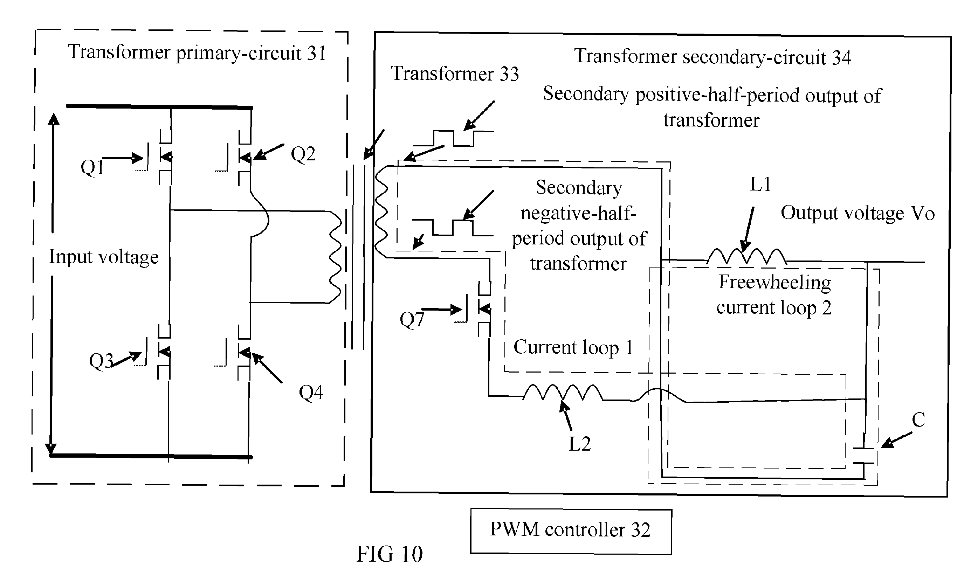

FIG. 10 is a schematic diagram showing a structure of an equivalent circuit within the T5 time segment according to the first embodiment of the present invention. As shown in FIG. 10, the output of the first output side of the transformer connected with the drain terminal of the MOSFET Q7 is a high electrical level, the MOSFET Q7 is turned on, and the MOSFET Q8 is turned off. The MOSFETs Q5 and Q6 in a secondary winding of the transformer 33, the inductor L2, the capacitor C, the MOSFET Q7, and the load constitute a current loop 1. The MOSFET Q6 in a secondary winding of the transformer 33, the inductor L1, the capacitor C, and the load constitute a continuing current loop 2. The working principles are similar to those of the T2 time segment, and are not repeated here any further.

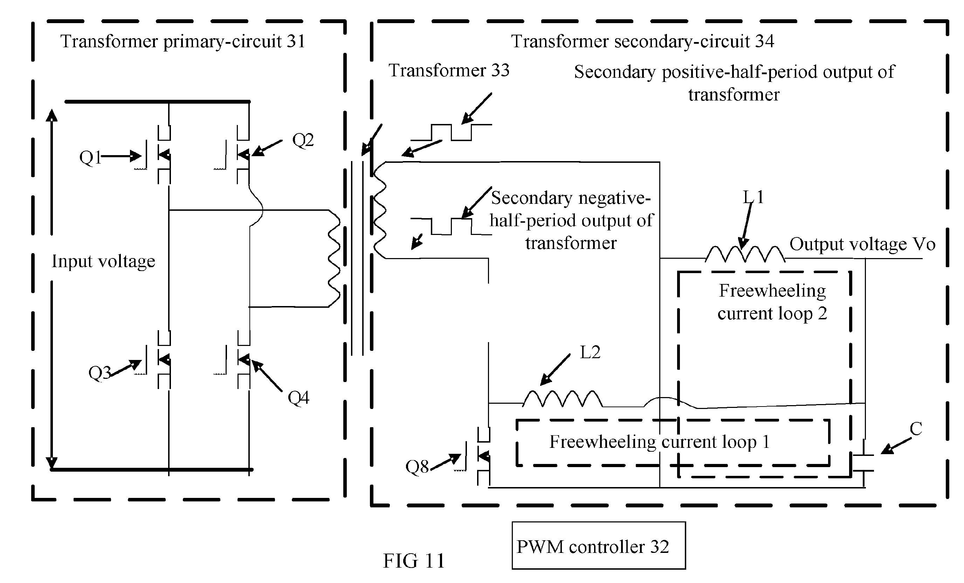

FIG. 11 is a schematic diagram showing a structure of an equivalent circuit within the T6 time segment according to the first embodiment of the present invention. As shown in FIG. 11, the output of the first output side of the transformer connected with the drain terminal of the MOSFET Q7 is a low electrical level, and the MOSFET Q7 is cut off; the output of the second output side of the transformer connected with the source terminal of the MOSFET Q8 is a high electrical level, and the MOSFET Q8 is turned on. The MOSFETs Q5 and Q6 are turned on because the gate terminal drive signal is still a high-level signal. The MOSFET Q8 in a secondary winding of the transformer 33, the inductor L2, the capacitor C, and the load constitute a continuing current loop 1. The MOSFET Q6 in a secondary winding of the transformer 33, the inductor L1, the capacitor C, and the load constitute a continuing current loop 2. The working principles are similar to those of the T3 time segment.

In practice, the PWM controller outputs two PWM control signals. One is a PWM control signal with a fixed or adjustable duty ratio, and is configured to control the gate terminal of the MOSFETs Q1-Q4 of the transformer primary-circuit, and turn on or turn off the MOSFETs Q1, Q2, Q3, and Q4. The other is a PWM control signal which is output according to the output signals of the load and has an adjustable duty ratio, and is configured to control the gate terminal of the MOSFETs Q5-Q8 to turn on or turn off the MOSFETs Q5-Q8. According to the received output signal of the load, the PWM controller regulates the PWM control signals which control the transformer secondary-circuit and have an adjustable duty ratio. The two PWM control signals may be generated by the same hardware circuit in the PWM controller, or by the same internal hardware circuit in addition to software. Alternatively, the two PWM control signals may be generated by different hardware circuits in the PWM controller, or by different internal hardware circuits in addition to software.

The PWM control signals which are output by the PWM controller and have a fixed duty ratio may be generated by an internal hardware circuit, or by an internal hardware circuit in addition to software.

The PWM control signals output by the PWM controller may be connected with the MOSFET directly to drive the MOSFET, or may be converted by an isolation drive transformer before driving the MOSFET, or may be converted by a drive integrated chip before driving the MOSFET.

In practice, resistors may be connected in series between the inductor L1, the inductor L2, and the capacitor C to detect current.

The foregoing embodiment reveals that: the feedback voltage output by the load is output to the PWM controller directly, without passing through the isolation component such as voltage feedback isolation optical-coupler; the PWM controller controls the duty ratio of the MOSFET of the secondary side of the transformer to perform wide-range regulation for the output voltage; the non-isolation Buck conversion circuit provides high-speed dynamic regulation response, thus improving the speed of dynamic regulation response in the case of wide-range regulation of the output voltage. Meanwhile, the PWM controller outputs a PWM control signal with a fixed duty ratio to control fixed time of connection and cutoff of the primary MOSFET of the transformer, thus preventing the working magnetic induction strength of the transformer from exceeding the saturated magnetic induction strength of the transformer when the dynamic regulation range of the output voltage is wide, avoiding the risks of magnetic saturation, and avoiding howl of the isolation transformer.

### Embodiment 2

In the first embodiment, two phases of Buck conversion circuits constitute a single-output voltage conversion circuit in the topology of the conversion circuit capable of two-phase Buck conversion and synchronous rectification. Alternatively, the two phases of Buck conversion circuits in the two-phase Buck conversion circuit are output separately to constitute two output voltage conversion circuits.

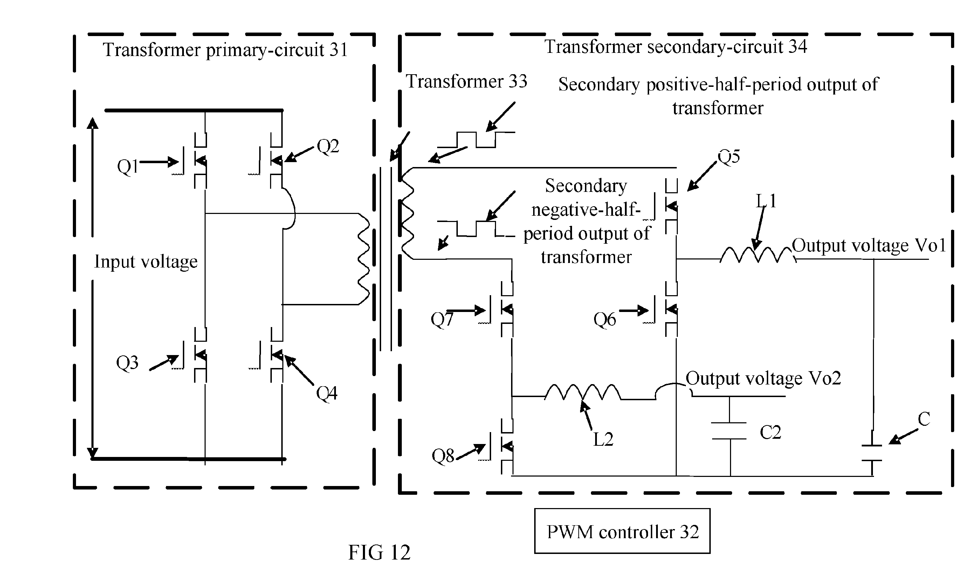

FIG. 12 is a schematic diagram showing a structure of a system for implementing DC-DC conversion of an isolation high-frequency switch according to the second embodiment of the present invention. As shown in FIG. 12, the system includes: a transformer primary-circuit 31, a PWM controller 32, a transformer 33, and a transformer secondary-circuit 34.

The transformer primary-circuit 31 includes MOSFETs Q1, Q2, Q3, and Q4 (which constitute two bridge arms of the primary full bridge of the isolation DC-DC conversion transformer), and is configured to perform full-bridge conversion for the input voltage.

The transformer secondary-circuit 34 includes MOSFETs Q5, Q6, Q7, and Q8; inductor L1 and L2; and capacitors C and C2. The Q5, Q6, L1, and C constitute one phase of a Buck conversion circuit capable of Buck conversion and synchronous rectification at the secondary side of the transformer. The Q7, Q8, L2, and C2 constitute the other phase of independent Buck conversion circuit capable of Buck conversion and synchronous rectification at the secondary side of the transformer. The transformer secondary-circuit 34 performs buck conversion for the output voltage of the transformer, and outputs the converted voltage to the load; meanwhile, feeds back the output signal of the load to the PWM controller 32.

The PWM controller 32 is configured to output a PWM control signal, whose duty ratio is approximately fixed 50% or adjustable; to drive the gate terminal of the MOSFETs Q1, Q2, Q3, and Q4 to turn on or turn off the MOSFETs Q1, Q2, Q3, and Q4. The PWM controller is further configured to output a PWM control signal with an adjustable duty ratio according to the output signal of the load, to drive the gate terminal of the MOSFETs Q5, Q6, Q7, and Q8 to turn on or turn off the MOSFETs Q5, Q6, Q7, and Q8, receive the output signals of the load, and regulate the output PWM control signals. The transformer 33 is a main isolation transformer, configured to isolate the transformer primary-circuit 31 from the transformer secondary circuit 34, and convert transformer input voltage to transformer output voltage for outputting.

As shown in FIG. 5, in the T1 time segment, the system works at the first half period; the MOSFETs Q7 and Q8 are turned on simultaneously; the MOSFETs Q5 and Q6, the inductor L1, and the capacitor C constitute the first-half-period Buck conversion circuit to chop the square wave level output by the transformer and obtain an output voltage Vₒ₁; the MOSFET Q8, the inductor L2, and the capacitor C2 constitute a continuing current loop to keep the output voltage Vₒ₂ unchanged. In the T4 time segment, the system works at the last half period; the MOSFETs Q5 and Q6 are turned on simultaneously; the MOSFETs Q7 and Q8, the inductor L2, and the capacitor C2 constitute the last-half-period Buck conversion circuit to chop the square wave level output by the transformer and obtain the output voltage Vₒ₂; the MOSFET Q6, the inductor L1, and the capacitor C constitute a continuing current loop to keep the output voltage Vₒ₁ unchanged.

The T1 time segment may be subdivided into a T2 time segment and a T3 time segment. The T4 time segment may be subdivided into a T5 time segment and a T6 time segment.

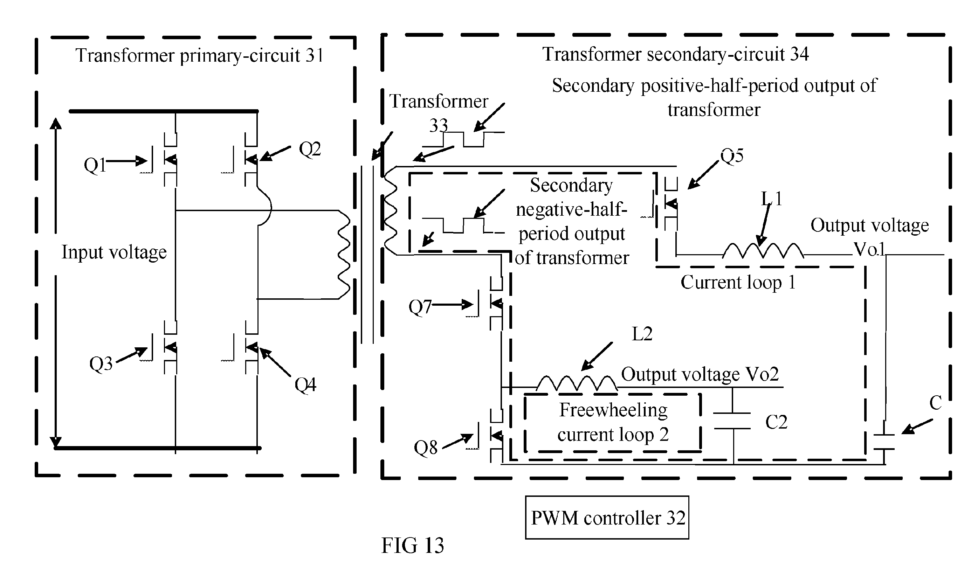

FIG. 13 is a schematic diagram showing a structure of an equivalent circuit within the T2 time segment according to the second embodiment of the present invention. As shown in FIG. 13, in the T2 time segment, the MOSFETs Q5, Q7, and Q8 are turned on, the current flowing through the MOSFETs Q5, Q7, and Q8 is iₛ = iₗ₁. When the current flows over the inductor L1, the current increases linearly. The current flowing through the load is Iₒ₁, and the voltage between the two terminals of the load is Vₒ₁. The voltage at the second terminal of the inductor L1 connected with the load is the output voltage Vₒ. The voltage at the first terminal of the inductor L1 connected with the source terminal of the MOSFET Q5 is the transformer output voltage Vₛ. The voltage difference between the two sides of the inductor L1 is (Vₛ-Vₒ). When iₗ₁ < Iₒ, the capacitor C is in the discharging state; conversely, the capacitor C is in the charging state. The load voltage Vₒ₁ and the current Iₒ₁ keep unchanged, and the output signal of the load is fed back to the PWM controller 32.

The MOSFET Q8, the inductor L2, the capacitor C2, and the load constitute the continuing current loop 2. When iₗ₂ < Iₒ₂, the capacitor C2 is in the discharging state; conversely, the capacitor C2 is in the charging state. The load voltage Vₒ₂ and the current Iₒ₂ keep unchanged, and the output signal of the load is fed back to the PWM controller 32.

In the T3, T5, and T6 time segments, the equivalent circuit structure shown in FIG. 12 is similar to that in FIG. 8, FIG. 10, and FIG. 11, and their working principles are similar to those of the T2 time segment, and are not repeated here any further.

In practice, the PWM control signal that controls the gate terminal of the MOSFETs Q1-Q4 and the PWM control signal that controls the gate terminal of the MOSFETs Q5-Q8 may be output under control of the same PWM controller, or output under control of two different PWM controllers. When they are output under control of two different PWM controllers, the PWM controller that drives the transformer primary-circuit controls the transformer primary-circuit, outputs a PWM control signal with a fixed or adjustable duty ratio, to drive the gate terminal of the MOSFETs Q1, Q2, Q3, and Q4 to turn on or turn off the MOSFETs Q1, Q2, Q3 and Q4. The PWM controller that drives the transformer secondary-circuit controls the transformer secondary-circuit, outputs a PWM control signal with an adjustable duty ratio according to the feedback signal, drives the gate terminal of the MOSFETs Q5-Q8 to turn on or turn off the MOSFETs Q5-Q8, receives the output signal of the load, and regulates the output PWM control signal.

In practice, the transformer secondary-circuit in FIG. 3 may further include an intermediate voltage conversion circuit and a back-end non-isolation DC-DC conversion circuit. The intermediate conversion circuit converts the output voltage of the transformer to a proper intermediate voltage, and makes use of the high-speed dynamic response of the back-end non-isolation DC-DC conversion circuit to improve the dynamic regulation response of the output voltage and current of the circuit.

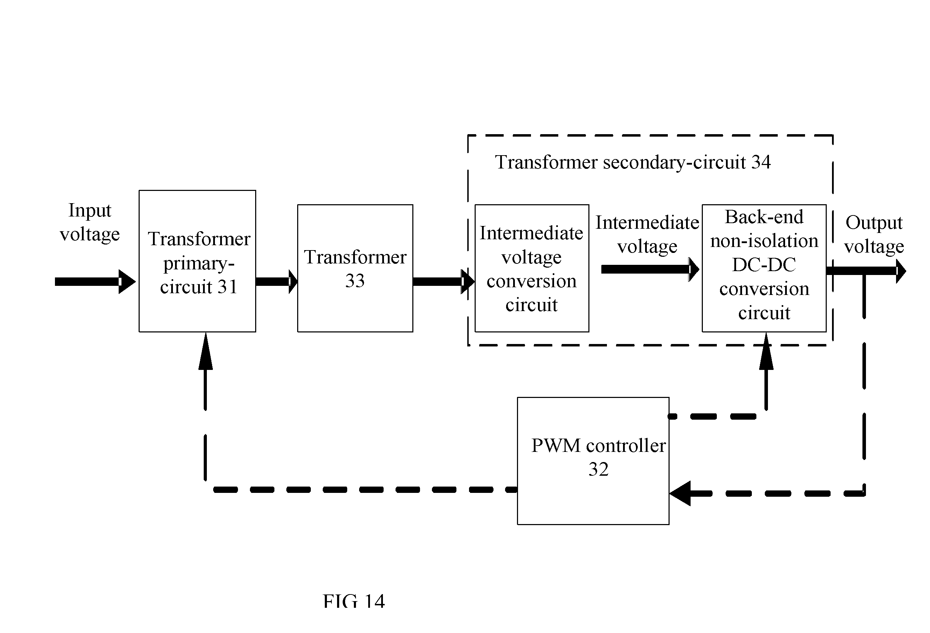

FIG. 14 is a schematic diagram showing another structure of a system for implementing DC-DC conversion of an isolation high-frequency switch according to an embodiment of the present invention. As shown in FIG. 14, the system includes a transformer primary-circuit 31, a transformer 33, an intermediate voltage conversion circuit, a PWM controller 32, and a back-end non-isolation DC-DC conversion circuit.

The transformer primary-circuit 31 is configured to perform full-bridge conversion for the input voltage.

The transformer 33 is configured to isolate the transformer primary-circuit 31 from the intermediate voltage conversion circuit, and convert transformer input voltage to transformer output voltage for outputting.

The intermediate voltage conversion circuit is configured to receive the square wave voltage output by the transformer 33, perform current doubling rectification or voltage doubling rectification, convert the voltage to intermediate voltage, and output the converted voltage to the back-end non-isolation DC-DC conversion circuit.

The PWM controller 32 is configured to output a PWM control signal to the back-end non-isolation DC-DC conversion circuit, drive the back-end non-isolation DC-DC conversion circuit, receive the signal output by the load of the back-end non-isolation DC-DC conversion circuit, and regulate the output PWM control signal.

The back-end non-isolation DC-DC conversion circuit, which provides high-speed dynamic response, is configured to receive the PWM control signal output by the PWM controller 32, perform Buck conversion for the intermediate voltage according to the PWM control signal, output the converted voltage to the load, and feed back the output signal to the PWM controller 32 to improve the dynamic regulation response of the circuit.

By reference to FIG. 14, three more embodiments are given below to elaborate the system for implementing DC-DC conversion of an isolation high-frequency switch.

### Embodiment 3

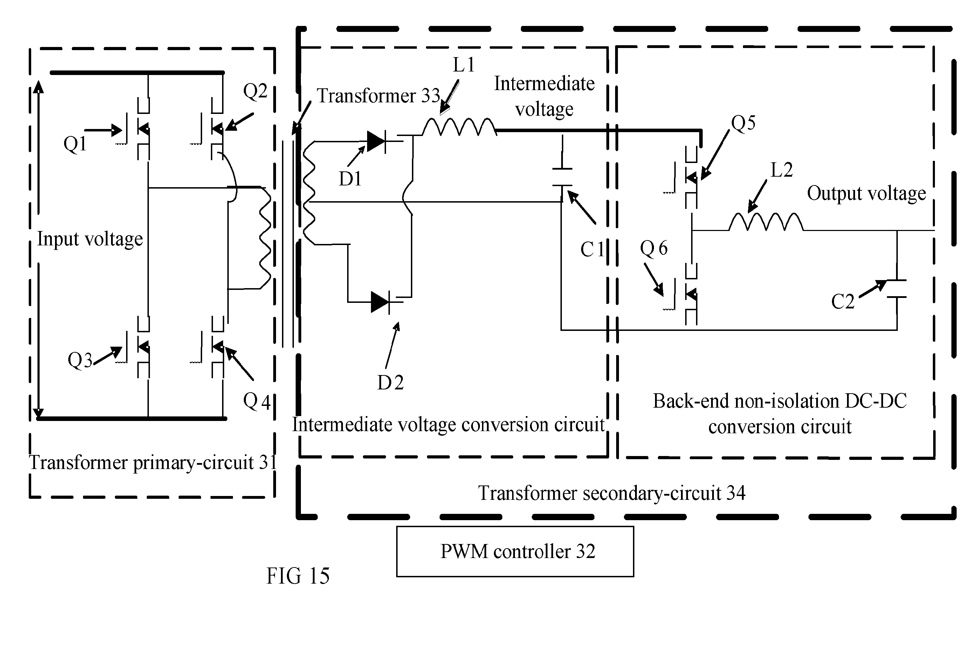

FIG. 15 is a schematic diagram showing a structure of a system for implementing DC-DC conversion of an isolation high-frequency switch according to the third embodiment of the present invention. As shown in FIG. 15, the system includes: a transformer primary-circuit 31, a transformer 33, an intermediate voltage conversion circuit, a PWM controller 32, and a back-end non-isolation DC-DC conversion circuit.

The transformer primary-circuit 31 includes MOSFETs Q1, Q2, Q3, and Q4 (which constitute two bridge arms of the primary full bridge of the isolation DC-DC conversion transformer), and is configured to perform full-bridge conversion for the input voltage.

The transformer 33 is a main isolation transformer with a central tap, where the central tap serves as the third output side of the transformer. The transformer is configured to isolate the transformer primary circuit from the intermediate voltage conversion circuit, and convert transformer input voltage to transformer output voltage for outputting.

The PWM controller 32 is configured to control time of on and off of the MOSFETs Q1, Q2, Q3, and Q4 of the transformer primary-circuit, receive the output feedback voltage, output a PWM control signal according to the feedback voltage to control the gate terminal of the MOSFETs Q5 and Q6 of the back-end non-isolation DC-DC conversion circuit and to further control the time of on and off of the MOSFETs Q5 and Q6, and regulate the PWM control signal output to the transformer secondary-circuit.

The intermediate voltage conversion circuit includes a transformer secondary-inductor L1, intermediate voltage output capacitor C1, and rectification diodes D1 and D2.

The back-end non-isolation DC-DC conversion circuit is configured to convert the intermediate voltage to the output voltage required by the user, and feed back the output voltage to the PWM controller 32 to improve the dynamic regulation response of output voltage of the circuit. The back-end non-isolation DC-DC conversion circuit includes a MOSFET Q5, a MOSFET Q6, an inductor L2, and a capacitor C2.

The positive terminal of the rectification diode D1 is connected with the first output side of the transformer. The positive terminal of the rectification diode D2 is connected with the second output side of the transformer. The negative terminal of the rectification diodes D1 and D2 is connected with the first side of the inductor L1. The second terminal of the inductor L1 is connected with the first terminal of the intermediate voltage output capacitor C1. The second terminal of the intermediate voltage output capacitor C1 is connected with the third output side of the transformer to output the intermediate voltage.

The rectification diodes D1 and D2, the inductor L1, and the intermediate voltage output capacitor C1 constitute a secondary voltage-doubling rectification circuit of the transformer. This circuit converts the transformer output voltage to a proper intermediate voltage, converts the intermediate voltage to an output voltage required by the load through a back-end non-isolation DC-DC conversion circuit, and exercises feedback control by feeding back the output voltage to the PWM controller 32.

In practice, the secondary rectification diodes D1 and D2 of the transformer may also be synchronous rectification MOSFETs. The drive voltage signal on the gate terminal may be controlled through the PWM control signal output by the PWM controller, or by the control signal generated by other circuits. The back-end non-isolation DC-DC conversion circuit may also be a multi-phase Buck conversion circuit.

### Embodiment 4

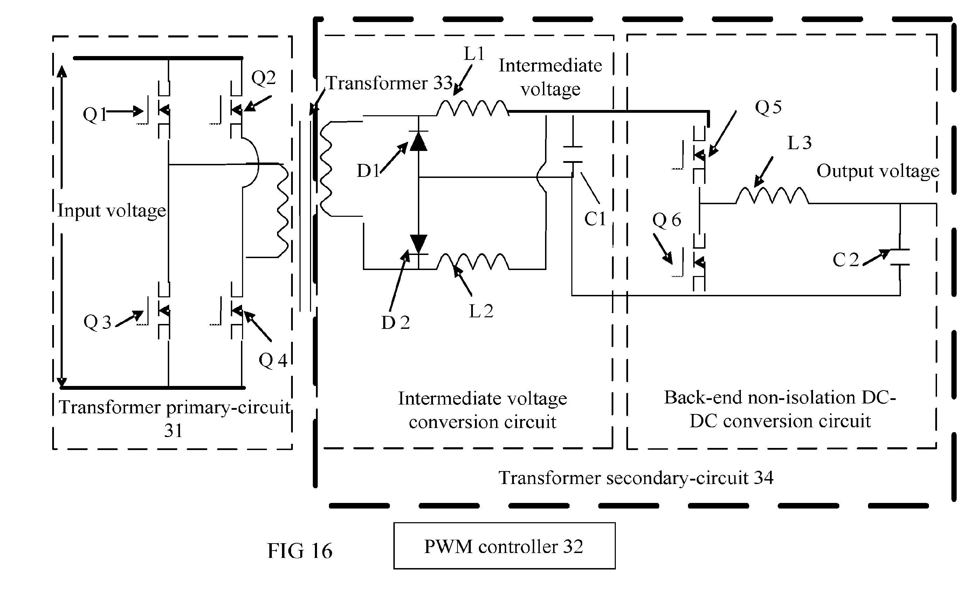

FIG. 16 is a schematic diagram showing a structure of a system for implementing DC-DC conversion of an isolation high-frequency switch according to the third embodiment of the present invention. As shown in FIG. 16, the system includes: a transformer primary-circuit 31, a transformer 33, an intermediate voltage conversion circuit, a PWM controller 32, and a back-end non-isolation DC-DC conversion circuit.

The transformer primary-circuit 31 includes MOSFETs Q1, Q2, Q3, and Q4 (which constitute two bridge arms of the primary full bridge of the isolation DC-DC conversion transformer), and is configured to perform full-bridge conversion for the input voltage.

The transformer 33 is configured to isolate the transformer primary-circuit from the intermediate voltage conversion circuit, and convert transformer input voltage to transformer output voltage for outputting.

The intermediate voltage conversion circuit includes a transformer secondary-inductors L1 and L2, intermediate voltage output capacitor C1, and rectification diodes D1 and D2.

The negative terminal of the rectification diode D1 is connected with the first output side of the transformer and the first terminal of the inductor L1. The negative terminal of the rectification diode D2 is connected with the second output side of the transformer and the first terminal of the inductor L2. The positive terminal of the rectification diodes D1 and D2 is connected with the second terminal of the intermediate voltage output capacitor C1. The second terminal of the inductors L2 and L1 is connected with the first terminal of the intermediate voltage output capacitor C1 to output the intermediate voltage.

The rectification diodes D1 and D2, the inductors L1 and L2, and the intermediate voltage output capacitor C1 constitute a secondary current-doubling rectification circuit of the transformer, where the secondary current-doubling rectification circuit of the transformer is configured to convert the output voltage of the transformer to a proper intermediate voltage.

The PWM controller 32 is configured to control time of turning on and turning off the MOSFETs Q1, Q2, Q3, and Q4 of the transformer primary-circuit, receive the output feedback voltage, output a PWM control signal according to the feedback voltage to control the gate terminal of the MOSFETs Q5 and Q6 of the back-end non-isolation DC-DC conversion circuit and to further control the time of turning on and turning off, and regulate the PWM control signal output to the transformer secondary-circuit.

The back-end non-isolation DC-DC conversion circuit is configured to convert the intermediate voltage to the output voltage required by the user, and feed back the output voltage to the PWM controller 32 to improve the dynamic regulation response of output voltage of the circuit. The back-end non-isolation DC-DC conversion circuit includes a MOSFET Q5, a MOSFET Q6, an inductor L3, and a capacitor C2.

The MOSFETs Q1, Q2, Q3, and Q4 of the transformer primary-circuit 31 constitute two bridge arms at the primary side of the full-bridge conversion transformer, and perform full-bridge conversion for the input voltage. The PWM controller 32 outputs a PWM control signal to drive the gate terminal of the MOSFETs Q1, Q2, Q3, and Q4 to turn on or turn off the MOSFETs Q1, Q2, Q3, and Q4, and outputs another PWM control signal to drive the gate terminal of the MOSFETs Q5 and Q6 of the back-end non-isolation DC-DC conversion circuit to turn on or turn off the MOSFETs Q5 and Q6. The rectification diodes D1 and D2, the inductors L1 and L2, and the intermediate voltage output capacitor C1 constitute a secondary current-doubling rectification circuit of the transformer. This circuit converts the input voltage to a proper intermediate voltage. Its working principles are similar to those of the secondary voltage-doubling rectification circuit described above. The MOSFETs Q5 and Q6, the inductor L3, and the capacitor C2 constitute a back-end Buck non-isolation DC-DC conversion circuit. This circuit converts the intermediate voltage to the output voltage required by the load, and performs feedback control by feeding back the output voltage to the PWM controller 32. This circuit provides high-speed dynamic response, thus improving the dynamic regulation response of output voltage of the circuit.

In practice, the secondary rectification diodes D1 and D2 of the transformer may also be synchronous rectification MOSFETs; and the back-end non-isolation DC-DC conversion circuit may also be a multi-phase Buck conversion circuit.

### Embodiment 5

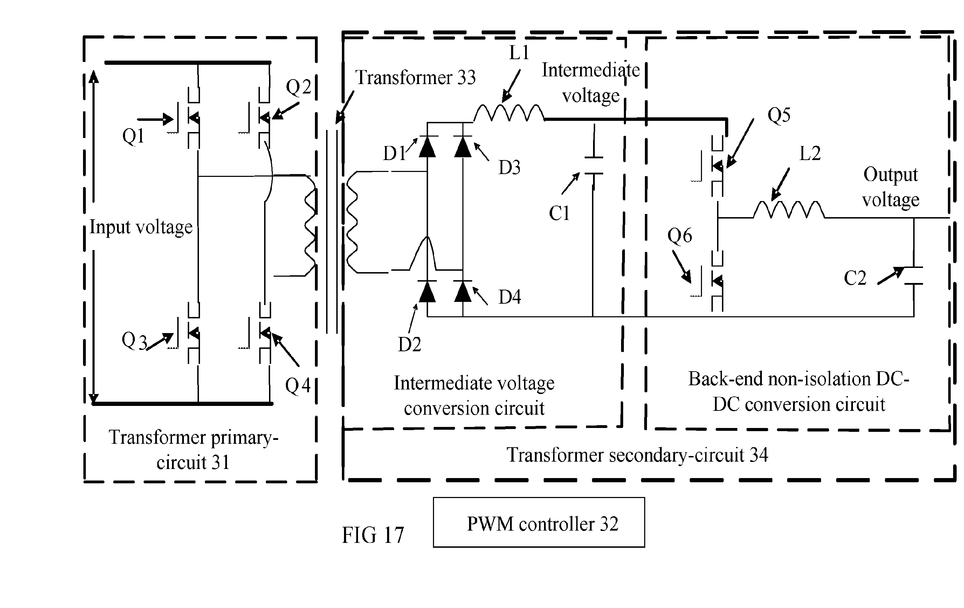

FIG. 17 is a schematic diagram showing a structure of a system for implementing DC-DC conversion of an isolation high-frequency switch according to the fifth embodiment of the present invention. As shown in FIG. 17, the positive terminal of the rectification diode D1 is connected with the first output side of the transformer and the negative terminal of the rectification diode D2; the negative terminal of the rectification diode D1 is connected with the negative terminal of the rectification diode D3 and the first side of the inductor L1; the positive terminal of the rectification diode D3 is connected with the second output side of the transformer and the negative terminal of the rectification diode D4; the first side of the intermediate voltage output capacitor C1 is connected with the second side of the inductor L1; the second side of the intermediate voltage output capacitor C1 is connected with the positive terminal of the rectification diodes D2 and D4 to output the intermediate voltage. Unlike FIG. 16, the rectification diodes D1, D2, D3, and D4, the inductor L1, and the intermediate voltage output capacitor C1 constitute a secondary full-bridge circuit of the transformer. This circuit converts the transformer output voltage to a proper intermediate voltage, converts the intermediate voltage to an output voltage required by the user through a back-end non-isolation DC-DC conversion circuit.

In practice, the back-end non-isolation DC-DC conversion circuit may also be a multi-phase Buck conversion circuit.

The foregoing embodiment reveals that: In the present invention, a PWM controller outputs a PWM control signal to control the transformer secondary-circuit, and a back-end non-isolation DC-DC conversion circuit is added for the isolation DC/DC conversion output. The high-speed dynamic response of the back-end non-isolation DC-DC conversion circuit improves the dynamic regulation response of the output voltage of the whole circuit, and increases the speed of dynamic response of the output voltage.

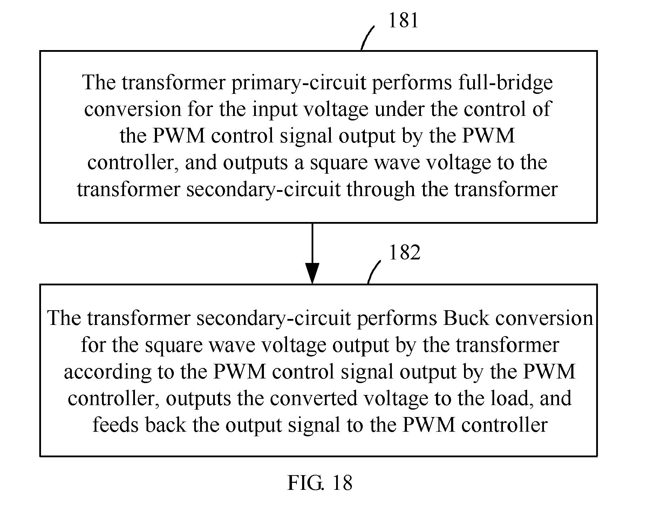

FIG. 18 is a schematic flowchart of a method for implementing DC-DC conversion of an isolation high-frequency switch according to an embodiment of the present invention. As shown in FIG. 18, the process includes the following steps:

Step 181: A transformer primary-circuit performs full-bridge conversion for the input voltage under the control of a PWM control signal output by a PWM controller, and outputs a square wave voltage to the transformer secondary-circuit through the transformer.

In this step, the PWM controller outputs a PWM control signal with a fixed or adjustable duty ratio to control the time of turning on and turning off the transformer primary-circuit, and performs full-bridge conversion for the input voltage. Through the transformer, the input voltage is converted into output square wave voltage of the transformer.

Step 182: A transformer secondary-circuit performs Buck conversion for the square wave voltage output by the transformer according to the PWM control signal output by the PWM controller, outputs the converted voltage to a load, and feeds back the output signal of the load to the PWM controller.

In this step, the PWM controller outputs a PWM control signal with a fixed or adjustable duty ratio to control the time of turning on and turning off the transformer secondary-circuit, performs first-half-period and last-half-period two-phase Buck conversion for the square wave voltage output by the transformer, and feeds back the output voltage to the PWM controller.

Alternatively, the PWM controller outputs a PWM control signal with an adjustable duty ratio to control the time of connection and cutoff of the transformer secondary-circuit. The intermediate voltage conversion circuit converts the square wave voltage output by the transformer to intermediate voltage directly. Through the back-end single-phase Buck non-isolation conversion or multi-phase Buck non-isolation conversion, the intermediate voltage is converted to the output voltage required by the load. The output voltage is fed back to the PWM controller, and the PWM controller receives the feedback voltage signal, and regulates the output PWM control signal.

By reference to FIG. 18, two embodiments are given below to elaborate the system for implementing DC-DC conversion of an isolation high-frequency switch.

### Embodiment 6

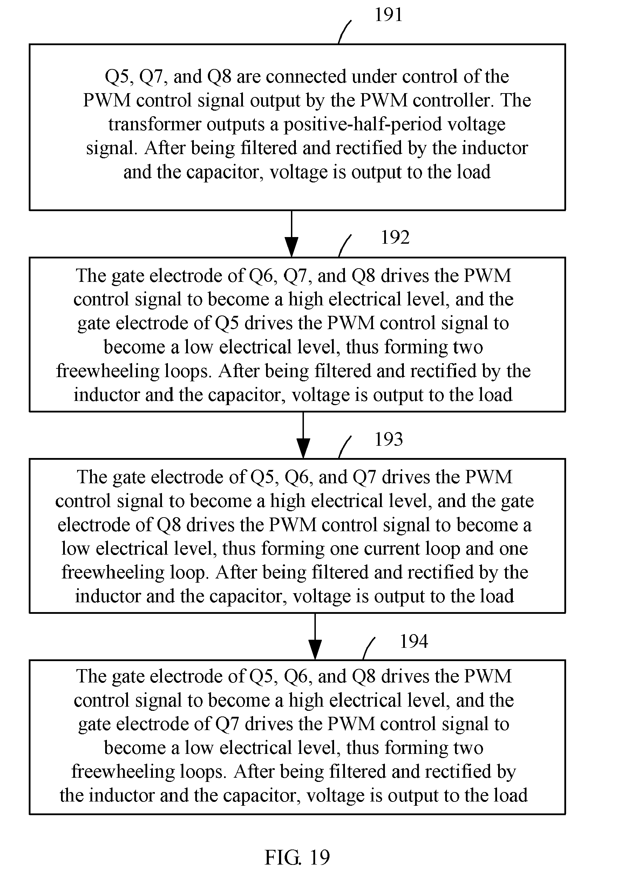

FIG. 19 is a schematic flowchart of a method for implementing DC-DC conversion of an isolation high-frequency switch according to the sixth embodiment of the present invention. As shown in FIG. 19, the process includes the following steps:

Step 191: The MOSFETs Q5, Q7, and Q8 are turned on under the control of the PWM control signal output by the PWM controller. The transformer outputs a positive-half-period voltage signal. After being filtered and rectified by the inductor and the capacitor, voltage is output to the load.

In this step, the MOSFETs Q5, Q7, and Q8 are turned on under control of the PWM control signal output by the PWM controller. The transformer outputs a positive-half-period voltage signal. The MOSFETs Q7, Q8, and Q5, the inductor L1, the capacitor C, and the load constitute a current loop. The MOSFET Q8, the inductor L2, the capacitor C, and the load constitute a continuing current loop. The MOSFET Q5 outputs a high electrical level. The current that flowing over the inductor L1 is a secondary input current of the transformer. The current increases linearly. The current flows over the inductor L2 in the continuing current loop. When the sum of the current of the inductor L1 and the current of the inductor L2 is greater than the load current, the capacitor C is in the charging state, the output voltage keeps unchanged, and the output voltage signal is fed back to the PWM controller. According to the feedback voltage signal, the PWM controller regulates the PWM control signal.

Step 192: The PWM control signal at the gate terminal of the MOSFETs Q6, Q7, and Q8 is at a high electrical level, and the gate terminal of the MOSFET Q5 drives the PWM control signal is at a low electrical level, thus forming two continuing loops. After being filtered and rectified by the inductor and the capacitor, voltage is output to the load.

In this step, the PWM control signal at the gate terminal of the MOSFET Q5 becomes a low electrical level which turns off the MOSFET Q5, and the WM control signal at the gate terminal the MOSFET Q6 changes from a low electrical level to a high electrical level which turns on the MOSFET Q6. The MOSFET Q6, the inductor L1, the capacitor C, and the load constitute a continuing current loop; meanwhile, the MOSFET Q8, the inductor L2, the capacitor C, and the load constitute another continuing current loop. When the sum of the current over the inductor L1 and the current over the inductor L2 is less than the load current, the capacitor C is in the discharging state. The output voltage keeps unchanged, and the output voltage signal is fed back to the PWM controller. The PWM controller regulates the PWM control signal according to the feedback voltage signal.

Step 193: The PWM control signal at the gate terminal of the MOSFETs Q5, Q6, and Q7 become a high electrical level, and the PWM control signal at the gate terminal of the MOSFET Q8 become a low electrical level, thus forming one current loop and one continuing loop. After being filtered and rectified by the inductor and the capacitor, voltage is output to the load.

In this step, the PWM control signal at the gate terminal of the MOSFET Q5 becomes a high electrical level which turns on the MOSFET Q5; the PWM control signal at the gate terminal of the MOSFET Q8 changes from a high electrical level to a low electrical level which turns off the MOSFET Q8. The MOSFETs Q5 and Q6, the inductor L2, the capacitor C, the MOSFET Q7, and the load constitute a current loop; the MOSFET Q6, the inductor L1, the capacitor C, and the load constitute a continuing current loop. When the sum of the current over the inductor L1 and the current over the inductor L2 is greater than the load current, the capacitor C is in the charging state. The output voltage keeps unchanged, and the output voltage signal is fed back to the PWM controller. The PWM controller regulates the PWM control signal according to the feedback voltage signal.

Step 194: The PWM control signal at the gate terminal of the MOSFETs Q5, Q6, and Q8 becomes a high electrical level, and the PWM control signal at the gate terminal of the MOSFET Q7 becomes a low electrical level, thus forming two continuing loops. After being filtered and rectified by the inductor and the capacitor, voltage is output to the load.

In this step, the PWM control signal at the gate terminal of the MOSFET Q7 becomes a low electrical level which turns off the MOSFET Q7; the PWM control signal at the gate terminal of the MOSFET Q8 changes from a low electrical level to a high electrical level which turns on the MOSFET Q8. The MOSFET Q6, the inductor L1, the capacitor C, and the load constitute a continuing current loop; meanwhile, the MOSFET Q8, the inductor L2, the capacitor C, and the load constitute another continuing current loop. When the sum of the current over the inductor L1 and the current over the inductor L2 is less than the load current, the capacitor C is in the discharging state. The output voltage keeps unchanged, and the output voltage signal is fed back to the PWM controller. The PWM controller regulates the PWM control signal according to the feedback voltage signal.

In practice, the continuing current loop and the current loop may output voltage independently. When they output voltage independently, the voltage output side of the inductor L2 and the source terminal side of the MOSFET Q8 need to be connected to the capacitor C2 in order to output another phase of voltage. Alternatively, resistors may be serial-connected between the inductor L1, the inductor L2, and the capacitor C to detect current.

Alternatively, the transformer output voltage may be converted to intermediate voltage first, and the back-end non-isolation DC-DC conversion circuit converts the intermediate voltage to the output voltage required by the user.

### Embodiment 7

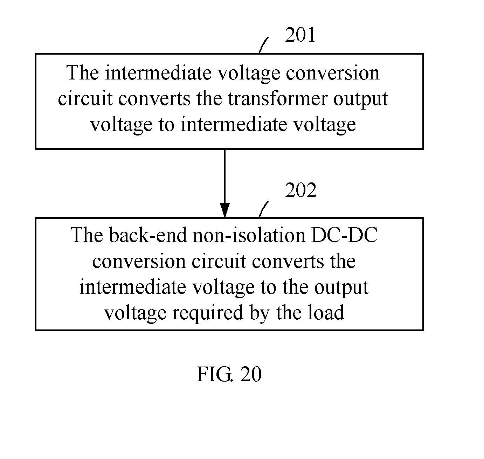

FIG. 20 is a schematic flowchart of a method for implementing DC-DC conversion of an isolation high-frequency switch according to the seventh embodiment of the present invention. As shown in FIG. 20, the process includes the following steps:

Step 201: The intermediate voltage conversion circuit converts the transformer output voltage to intermediate voltage.

In this step, the input voltage of the transformer primary-circuit is rectified and filtered by the transformer secondary-circuit after undergoing full-bridge conversion and transformer conversion, and the transformer output voltage is converted to intermediate voltage. The method for converting the transformer output voltage to intermediate voltage may be implemented through a secondary current-doubling rectification circuit of the transformer, where the circuit includes two rectification diodes (or MOSFETs), two inductors, and one capacitor. Alternatively, the method may be implemented through a secondary voltage-doubling rectification circuit of the transformer, where the circuit includes two rectification diodes (or MOSFETs), one inductor, and one capacitor. Alternatively, the method may be implemented through a secondary full-bridge conversion circuit of the transformer, where the circuit includes four rectification diodes (or MOSFETs), one inductor, and one capacitor.

Step 202: The back-end non-isolation DC-DC conversion circuit converts the intermediate voltage to the output voltage required by the load.

In this step, the back-end non-isolation DC-DC conversion circuit may be a single-phase Buck conversion circuit, or a multi-phase Buck conversion circuit. The output voltage is fed back to the PWM controller, and the PWM controller regulates the PWM control signal according to the feedback voltage signal in order to control the output voltage.

Through the foregoing embodiments, it is evident that: In the present invention, an intermediate voltage conversion circuit outputs intermediate voltage, and a back-end non-isolation DC-DC conversion circuit is added for the intermediate voltage signal. The high-speed dynamic response of the back-end non-isolation DC-DC conversion circuit improves the dynamic regulation response of the output voltage of the whole circuit.

In the foregoing embodiments, the high-level signal of the gate terminal of the MOSFET refers to the level signal required when the MOSFET is connected, and the high/low-level signal output by the secondary side of the transformer refers to high/low-level signal obtained after the primary-level signal of the transformer is converted by the transformer.

Elaborated above are the objectives, technical solution and benefits of preferred embodiments of the present invention. It is understandable that, although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A system for implementing DC-DC conversion of an isolation high-frequency switch, the system comprising a transformer primary-circuit, a transformer, a PWM controller, and a transformer secondary-circuit, wherein
the transformer primary-circuit is configured to output a square wave voltage to be converted to the transformer;
the transformer secondary-circuit comprises a Buck conversion circuit and a load, the Buck conversion circuit being configured to receive a PWM control signal output by the PWM controller, perform Buck conversion for the square wave voltage output by the transformer according to the PWM control signal, output the converted voltage to the load, and feed back an output signal of the load to the PWM controller; and
the PWM controller is configured to output the PWM control signal to drive the transformer primary-circuit and the transformer secondary-circuit, and regulate the PWM control signal to be output to the transformer secondary-circuit upon receiving the output signal of the load.

2. The system of claim 1, wherein the Buck conversion circuit comprises a first-half-period Buck conversion circuit, and a last-half-period Buck conversion circuit, and wherein
the first-half-period Buck conversion circuit is configured to receive the PWM control signal output from the PWM controller, perform Buck conversion over a first-half-period square wave voltage output from the transformer according to the PWM control signal, output the first-half-period square wave voltage to the load, and feed back the output signal of the load to the PWM controller;
the last-half-period Buck conversion circuit is configured to receive the PWM control signal output from the PWM controller, perform Buck conversion over a last -half-period square wave voltage output by the transformer according to the PWM control signal, output the last -half-period square wave voltage to the load, and feed back the output signal of the load to the PWM controller; and
the PWM controller is configured to output the PWM control signal to the first-half-period Buck conversion circuit and the last-half-period Buck conversion circuit, and regulate the PWM control signal to be output to the transformer secondary-circuit upon receiving the output signal of the load to adjust the PWM control signal.

3. The system of claim 2, wherein the first-half-period Buck conversion circuit comprises a first MOSFET (Q5), a second MOSFET (Q6), a first inductor (L1), and a first capacitor(C), the last-half-period Buck conversion circuit comprises a third MOSFET (Q7), a fourth MOSFET (Q8), a second inductor (L2), and the first capacitor(C), and wherein
the first MOSFET (Q5) is connected in series to the second MOSFET (Q6), a drain terminal of the first MOSFET (Q5) is connected to a first output of the transformer, a source terminal of the first MOSFET (Q5) is connected to a first terminal of the first inductor (L1), a gate terminal of the first MOSFET (Q5) is configured to received the PWM control signal from the PWM controller, a second terminal of the first inductor (L1) is connected to a second terminal of the second inductor (L2), a first terminal of the first capacitor(C) is connected to an output of the load, and a gate terminal of the second MOSFET (Q6) is configured to received the PWM control signal from the PWM controller;
a second terminal of the first capacitor(C) is connected to a source terminal of the second MOSFET (Q6) and a source terminal of the fourth MOSFET (Q8);
the third MOSFET (Q7) is connected in series to the fourth MOSFET (Q8), a drain terminal of the third MOSFET (Q7) is connected to a second output of t the transformer, a source terminal of the third MOSFET (Q7) is connected to a drain terminal of the fourth MOSFET (Q8) and a first terminal of the second inductor (L2), a gate terminal of the third MOSFET (Q7) is configured to received the PWM control signal from the PWM controller; and
a gate terminal of the fourth MOSFET (Q8) is configured to received the PWM control signal from the PWM controller

4. The system of claim 3, wherein when the system works in the system works in the first-half-period, the first MOSFET (Q5), the third MOSFET (Q7) and the fourth MOSFET (Q8) is turned on, and the second MOSFET (Q6) is turned off, the third MOSFET (Q7), the fourth MOSFET (Q8), the first MOSFET (Q5), the first inductor (L1), and the first capacitor(C) constitute a current loop1, the fourth MOSFET (Q8), the second inductor (L2), the first capacitor(C) and the load constitute a continuing current loop;
when the current flows through the first inductor (L1), the current increases linearly; the current flows through the load and output voltage to the load; the voltage of the second terminal of the first inductor (L1) connected to the load is the output voltage of the load, and the voltage of the second terminal of the first inductor (L1) connected to the source terminal of the first MOSFET (Q5) is the output voltage of the transformer;
the fourth MOSFET (Q8), the second inductor (L2), the first capacitor(C), and the load constitute a continuing current loop, when the current flows through the first inductor (L1) and the second inductor (L2) less than the current flows through the load, the first capacitor(C) is in the discharging state, if not, the first capacitor(C) is in the charging state, the voltage of the two terminal of the load and the current flows through the load keep unchanged, and the output signal of the load is fed back to the PWM controller;
when the second MOSFET (Q6), the third MOSFET (Q7) and the fourth MOSFET (Q8) is turned on, and the first MOSFET (Q5) is turned off, the second MOSFET (Q6) in a secondary winding of the transformer, the first inductor (L1), the first capacitor(C), and the load constitute a continuing current loop, and the fourth MOSFET (Q8) in a secondary winding of the transformer, the second inductor (L2), the first capacitor(C), and the load constitute another continuing current loop;
when the first MOSFET (Q5) is turned off, the magnetic field in the first inductor (L1) changes the voltage polarity at both terminal of the first inductor (L1) to maintain continuity of the current flows through the first inductor (L1), the voltage at the second terminal of the first inductor (L1) connected to the load is output voltage of the load, the voltage at the first terminal of the first inductor (L1) connected with the source terminal of the first MOSFET (Q5) is zero;
the fourth MOSFET (Q8), the second inductor (L2), the first capacitor(C), and the load still constitute the continuing current loop, when the current flows through the first inductor (L1) and the second inductor (L2) less than the current flows through the load, the first capacitor(C) is in the discharging state, if not, the first capacitor(C) is in the charging state, the voltage of the two terminal of the load and the current flows through the load keep unchanged, and the output signal of the load is fed back to the PWM controller;
when the system works in the last-half-period, the first MOSFET (Q5), the second MOSFET (Q6), and the third MOSFET (Q7) is turned on, and the fourth MOSFET (Q8) is turned off, the first MOSFET (Q5), the second MOSFET (Q6), the first capacitor(C), the second inductor (L2), and the third MOSFET (Q7) constitute a current loop, the second MOSFET (Q6), the first inductor (L1), the first capacitor(C) and the load constitute a continuing current loop;
when the current flows through the second inductor (L2)" the current increases linearly; the current flows through the load and output voltage to the load; the voltage of the second terminal of the second inductor (L2) connected to the load is the output voltage of the load, and the voltage of the second terminal of the second inductor (L2) connected to the source terminal of the third MOSFET (Q7) is the output voltage of the transformer;
the second MOSFET (Q6), the first inductor (L1), the first capacitor(C), and the load constitute a continuing current loop, when the current flows through the first inductor (L1) and the second inductor (L2) less than the current flows through the load, the first capacitor(C) is in the discharging state, if not, the first capacitor(C) is in the charging state, the voltage of the two terminal of the load and the current flows through the load keep unchanged, and the output signal of the load is fed back to the PWM controller;
when the first MOSFET (Q5), the second MOSFET (Q6), the fourth MOSFET (Q8) is turned on, and the third MOSFET (Q7) is turned off, the fourth MOSFET (Q8) in a secondary winding of the transformer, the second inductor (L2), the first capacitor(C), and the load constitute a continuing current loop, and the second MOSFET (Q6), the first inductor (L1), the first capacitor(C), and the load constitute another continuing current loop;
when the third MOSFET (Q7) is turned off, the magnetic field in the second inductor (L2) changes the voltage polarity at both terminal of the second inductor (L2) to maintain continuity of the current flows through the second inductor (L2), the voltage at the second terminal of the second inductor (L2) connected to the load is output voltage of the load, the voltage at the first terminal of the second inductor (L2) connected with the source terminal of the third MOSFET (Q7)is zero;
the second MOSFET (Q6), the first inductor (L1), the first capacitor(C), and the load constitute a continuing current loop, when the current flows through the first inductor (L1) and the second inductor (L2) less than the current flows through the load, the first capacitor(C) is in the discharging state, if not, the first capacitor(C) is in the charging state, the voltage of the two terminal of the load and the current flows through the load keep unchanged, and the output signal of the load is fed back to the PWM controller, and repeat these steps.

5. The system of claim 3, wherein the last-half-period Buck conversion circuit further comprises a second capacitor (C2), a first terminal of the second capacitor (C2) is connected to a second terminal of the second inductor (L2), a second terminal of the second capacitor (C2) is connected to a first terminal of the first capacitor (C), a source terminal of the second MOSFET (Q6), and a source terminal of the fourth MOSFET (Q8) to output the voltage.

6. The system of claim 1, wherein the Buck conversion circuit comprises an intermediate voltage conversion circuit, and a back-end non-isolation DC-DC conversion circuit, and wherein
the intermediate voltage conversion circuit is configured to receive the square wave voltage output by the transformer, perform current doubling rectification or voltage doubling rectification, convert the voltage to intermediate voltage, and output the converted voltage to the back-end non-isolation DC-DC conversion circuit;
the back-end non-isolation DC-DC conversion circuit is configured to receive the PWM control signal output by the PWM controller, perform Buck conversion for the intermediate voltage according to the PWM control signal, output the converted voltage to the load, and feed back the output signal to the PWM controller; and
the PWM controller is configured to output a PWM control signal to the back-end non-isolation DC-DC conversion circuit, drive the back-end non-isolation DC-DC conversion circuit, receive the signal output by the load of the back-end non-isolation DC-DC conversion circuit, and regulate the output PWM control signal.

7. The system of claim 6, wherein the transformer is a main isolation transformer with a central tap, the central tap serves as a third output of the transformer, and the intermediate voltage conversion circuit comprises a third inductor of the secondary side of the transformer, a intermediate voltage output capacitor, a rectifier (D1), and a rectifier (D2), and wherein
a positive terminal of the rectifier (D1) is connected with the first output of the transformer, a positive terminal of the rectifier (D2) is connected with the second output of the transformer, a negative terminal of the rectifiers (D1) and (D2) is connected with a first terminal of the third inductor, a second terminal of the third inductor is connected with a first terminal of the intermediate voltage output capacitor, and a second terminal of the intermediate voltage output capacitor is connected with the third output of the transformer to output the intermediate voltage.

8. The system of claim 6, wherein the intermediate voltage conversion circuit comprises a third inductor of the secondary side of the transformer, an intermediate voltage output capacitor, a rectifier (D1), a rectifier (D2), and a fourth inductor, and wherein
a negative terminal of the rectifier (D1) is connected with the first output of the transformer and the a terminal of the third inductor, a negative terminal of the rectifier (D2) is connected with the second output of the transformer and a first terminal of the fourth inductor, a positive terminal of the rectifiers (D1) and D2 is connected with a second terminal of the intermediate voltage output capacitor, and a second terminal of the fourth inductor and an a second terminal of the third inductor are connected with the first terminal of the intermediate voltage output capacitor to output the intermediate voltage.

9. The system of claim 6, wherein the intermediate voltage conversion circuit comprises a third inductor of the secondary side of the transformer, a intermediate voltage output capacitor, a fourth inductor, a rectifier (D1), a rectifier (D2), a rectifier (D3), and a rectifier (D4), and wherein
a positive terminal of the rectifier (D1) is connected with a first output of the transformer and a negative terminal of the rectifier (D2);
a negative terminal of the rectifier (D1) is connected with a negative terminal of the rectifier (D3) and a first terminal of the third inductor;
a positive terminal of the rectifier (D3) is connected with the second output of the transformer and a negative terminal of the rectifier (D4);
a first terminal of the intermediate voltage output capacitor is connected with a second terminal of the third inductor; and
a second terminal of the intermediate voltage output capacitor is connected with the positive terminal of the rectifier (D2) and (D4) to output the intermediate voltage.

10. The system of claim 7 or 8 or 9, wherein the rectifier is rectification diode or MOSFET.

11. The system of claim 7 or 8 or 9, wherein back-end non-isolation DC-DC conversion circuit comprises a fifth MOSFET, a sixth MOSFET, a fifth inductor, and a third capacitor, a source terminal of the fifth MOSFET is connected to a first terminal of the fifth inductor, a gate terminal of the fifth MOSFET and the sixth MOSFET receives the PWM control from the PWM controller, a first terminal of the third capacitor is connected to a second terminal of the fifth inductor, and a second terminal of the third capacitor is connected to a source terminal of the sixth MOSFET and the second terminal of the intermediate voltage output capacitor to output the voltage of the load.

12. The system of claim 1, wherein the PWM controller outputs two PWM control signals, one is a PWM control signal with a fixed or adjustable duty ratio, and is configured to control the transformer primary-circuit, and the other is a PWM control signal which is output according to the output signals of the load and have an adjustable duty ratio, and is configured to control the transformer secondary-circuit.

13. A method for implementing DC-DC conversion of an isolation high-frequency switch, comprising:
performing, by a transformer primary-circuit, full-bridge conversion for the input voltage under the control of the PWM control signal output by the PWM controller, and outputting a square wave voltage to the transformer secondary-circuit through the transformer, and
performing, by a transformer secondary-circuit, Buck conversion for the square wave voltage output by the transformer according to the PWM control signal output by the PWM controller, outputting the converted voltage to a load, and feeding back the output signal of the load to the PWM controller.

14. The method of claim 13, wherein the PWM control signal at the transformer primary-circuit is a PWM control signal with a fixed or adjustable duty ratio.

15. The method of claim 13, wherein the step of Buck conversion comprises :
outputting, by the PWM controller, a PWM control signal with an adjustable duty ratio to control the time of turning on and turning off the transformer secondary-circuit, and performing first-half-period and last-half-period two-phase Buck conversion for the square wave voltage output by the transformer.

16. The method of claim 13, wherein the step of Buck conversion comprises:
performing, by the transformer secondary-circuit, current doubling rectification or voltage doubling rectification for the received square wave voltage, and outputting an intermediate voltage; and
performing single-phase Buck conversion for the intermediate voltage according to the PWM control signal with an adjustable duty ratio to convert the intermediate voltage to an output voltage required by the load, and outputting the output voltage to the load.
